Europäisches Patentamt

**European Patent Office**

**Office européen des brevets**

(11) Numéro de publication: **0 310 493 B1**

(12) **FASCICULE DE BREVET EUROPEEN**

(45) Date de publication de fascicule du brevet: **08.12.93**   (51) Int. Cl.⁵: $\text{G01S } 3/78$

(21) Numéro de dépôt: **88402433.2**

(22) Date de dépôt: **27.09.88**

(54) **Dispositif optoélectrique de détection et de localisation d'une source rayonnante.**

(30) Priorité: **02.10.87 FR 8713666**

(43) Date de publication de la demande:
**05.04.89 Bulletin 89/14**

(45) Mention de la délivrance du brevet:
**08.12.93 Bulletin 93/49**

(84) Etats contractants désignés:
**DE GB IT**

(56) Documents cités:
EP-A- 0 004 227       FR-A- 2 583 197
GB-A- 1 027 457       GB-A- 1 459 386
US-A- 3 486 030       US-A- 3 764 198
US-A- 3 954 340

MECHANICAL ENGINEERING, vol. 96, no. 11, novembre 1974, page 43, New York, US; "Sun gate sensor system"

LASER FOCUS, vol. 17, no. 4, avril 1981, pages 72-80, Newton, Mass., US; P.T. BALLARD: "Detecting laser illumination for military countermeasures"

(73) Titulaire: **THOMSON-CSF**
**51, Esplanade du Général de Gaulle**
**F-92800 Puteaux(FR)**

(72) Inventeur: **Marquet, Patrice**
**THOMSON-CSF**
**SCPI**
**19, avenue de Messine**
**F-75008 Paris(FR)**
Inventeur: **Dunouvion, Philippe**
**THOMSON-CSF**
**SCPI**
**19, avenue de Messine**
**F-75008 Paris(FR)**
Inventeur: **Lemaire, Jean-Marc**
**THOMSON-CSF**
**SCPI**
**19, avenue de Messine**
**F-75008 Paris(FR)**

(74) Mandataire: **Lincot, Georges et al**
**THOMSON-CSF,**
**SCPI,**
**B.P. 329,**
**50, rue Jean-Pierre Timbaud**
**F-92402 Courbevoie Cédex (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 310 493 B1

## Description

La présente invention concerne un dispositif optoélectrique de détection et de localisation de source rayonnante.

La localisation est obtenue par rapport à deux axes de référence, tels les axes site et gisement, ce qui donne la direction de la source par rapport au dispositif ; avec deux dispositifs on peut produire deux localisations directionnelles sécantes et donc mesurer la localisation spatiale de la source.

Par source rayonnante on entend, soit une source éloignée, soit une source plus proche mais de faible dimension de manière à l'assimiler à une source ponctuelle ou à l'infini.

Il est connu d'effectuer une écartométrie dite deux axes, d'une source lumineuse ponctuelle ou assimilable à une source à l'infini, en utilisant un détecteur à quatre quadrants. Le détecteur est situé en aval d'un objectif optique qui concentre le rayonnement incident reçu de la source sous forme d'un faisceau parallèle pour en former une tache lumineuse de dimension moyenne déterminée dans le plan de photodétection. Les quatre signaux respectifs détectés sont traités par sommation et pondération pour mesurer le dépointage angulaire en site et en gisement de la source par rapport à l'axe optique du dispositif. Le brevet français 2.420.144 (ou US 4.286.760) ainsi que le document FR-A-2 583 197 décrivent un dispositif de détection et de localisation de source rayonnante de ce genre.

Face à l'utilisation de plus en plus fréquente des lasers dans les système d'armes (télémètres, illuminateurs, ...) il devient nécessaire de prévenir l'équipage d'un véhicule ou d'un aéronef en cas d'illumination de celui-ci. Des équipements correspondants appelés détecteurs d'alerte laser, n'ont pour but que de détecter la présence d'une menace, ceci dans un champ important autour du porteur, par exemple de 360° en gisement et 90° en site.

Les dispositifs de localisation précités ne sont généralement pas prévus pour fonctionner dans des champs aussi importants. Leur adaptation à ces champs entraîne une baisse de sensibilité incompatible avec la détection du signal utile.

Un objet de l'invention est de remédier aux inconvénients précités en combinant le détecteur quatre quadrants avec une simple ouverture circulaire en amont formant diaphragme.

L'absence d'optique de focalisation permet à un tel dispositif d'avoir simultanément un grand champ qui peut être supérieur à ± 45° et une grande pupille liée seulement à la dimension du détecteur. Le dispositif peut en outre être utilisé dans n'importe quelle bande spectrale et aussi bien pour la réception d'émissions continues ou impulsionnelles. La résolution est de quelques degrés et la sensibilité, liée à la surface de détection, est importante.

Selon l'invention il est réalisé un dispositif optoélectrique de détection et de localisation de source rayonnante comportant un détecteur plan à quatre quadrants précédé d'un élément optique récepteur, et des circuits de traitement et d'écartométrie des quatre signaux détectés qui déterminent les coordonnées d'écarts de la tache formée par la source sur le détecteur par rapport au centre du détecteur, ledit élément optique étant un diaphragme plan parallèle au détecteur formé par une zone centrale transparente d'un cache opaque, de manière à autoriser sans focalisation la détection et la localisation de source dans un champ d'observation important, dispositif caractérisé en ce que les circuits de traitement et d'écartométrie des quatre signaux détectés localisent la direction de la source, par rapport à une direction de référence du dispositif passant par le centre du détecteur et le centre du cache, en déterminant l'angle de dépointage de la source par rapport à la direction de référence à partir d'une courbe de mesure de déviation dépendant de la distance D entre le plan du diaphragme et le plan du détecteur et de la forme et des dimensions de l'ouverture dudit diaphragme et reliant ledit angle de dépointage auxdites coordonnées d'écarts.

Les caractéristiques et avantages de l'invention apparaîtront dans la description qui suit donnée à titre d'exemple, à l'aide des figures annexées qui représentent :
- Fig. 1 un schéma d'un dispositif de détection et de localisation conforme à l'invention ;
- Fig.2, un bloc-diagramme relatif au détecteur et au circuit électronique ;
- Fig.3,un schéma en coupe transversale du dispositif ;
- Fig.4, la courbe de réponse du dispositif.

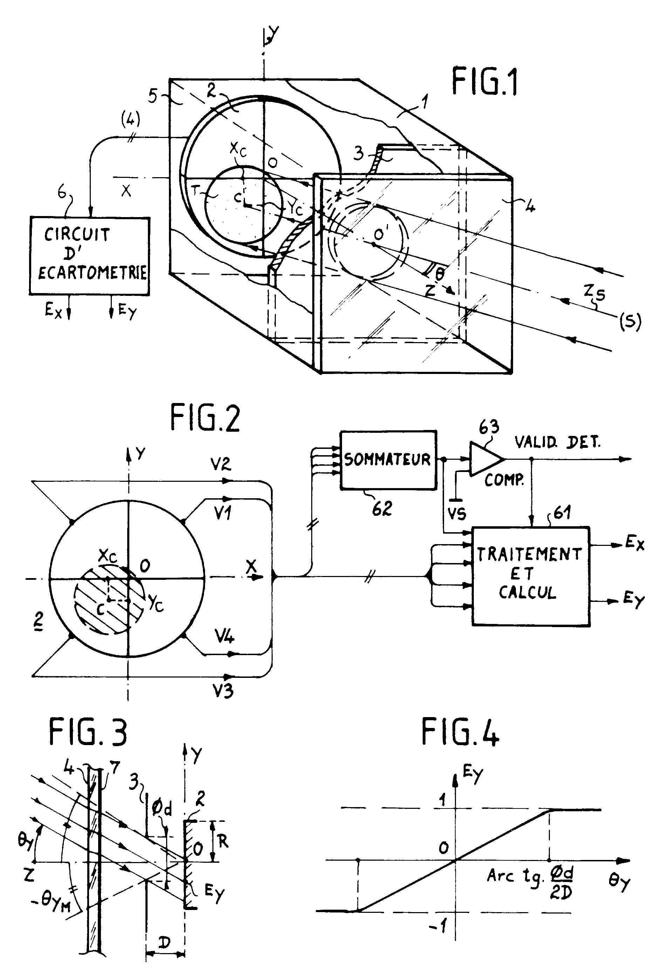

En se reportant à la figure 1, le dispositif comporte un boîtier 1 pour isoler le dispositif détecteur à quatre quadrants 2 du rayonnement ambiant. Ce détecteur plan est monté sur une face plane 5 au fond du boîtier. Parallèlement au détecteur 2, un diaphragme 3 est contenu dans un plan parallèle au dispositif détecteur. Le diaphragme a été partiellement découpé pour clarifier la représentation. Il comporte une partie transparente ou une ouverture, par exemple circulaire de diamètre $\emptyset d$ (figure 3), par laquelle passent les rayons lumineux. La partie restante du diaphragme 3 est de transparence nulle et forme un cache opaque.

De manière préférentielle, le diaphragme est précédé d'un hublot transparent 4 qui constitue la face avant du boîtier 1 de manière à isoler le dispositif de l'environnement et, en particulier, éviter l'entrée de poussières.

Le hublot 4 peut être pourvu d'un dépôt 7 (figure 3) formant un filtre optique et situé côté interne au boîtier 1, ou être constitué d'un verre absorbant limitant la bande spectrale.

Selon une variante de réalisation, la partie transparente 4 formant hublot peut être reportée au niveau de l'ouverture du diaphragme 3 ce qui simplifie l'équipement mais qui impose une valeur fixe du diamètre ∅d du diaphragme.

Le dispositif est complété par les circuits électroniques de traitement et d'écartométrie 6 qui calculent les écarts EX et EY du point C correspondant au centre du cercle de la tache lumineuse T formée par les rayons incidents passant par l'ouverture circulaire du diaphragme. Le rayonnement provient de la source S et peut être considéré reçu sous forme d'un faisceau de rayons parallèles. L'axe Z passant par le centre O du détecteur et le centre O′ de l'ouverture est l'axe optique Z du dispositif. La direction ZS est celle présentée par la source S et l'angle $\theta$ le dépointage angulaire de cette source par rapport au dispositif. Les coordonnées d'écarts XC et YC correspondent aux écarts en site et en gisement de la source détectée selon les deux axes cartésiens X et Y .

La figure 2 représente les circuits électroniques. Les quatre sorties de détection V1 à V4 sont appliquées aux circuits d'écartométrie 61. Par ailleurs, une deuxième voie peut être prévue ayant à l'entrée un sommateur 62 suivi d'un circuit comparateur à seuil 63 pour valider la détection d'une source rayonnante d'intensité déterminée. Le signal de validation est transmis notamment aux circuits d'écartométrie 61.

Les écarts EX et EY sont déduits par le calcul à partir des formules classiques :

$$EX = \frac{(V1+V4)-(V2+V3)}{V1+V2+V3+V4}$$

$$EY = \frac{(V1+V2)-(V3+V4)}{V1+V2+V3+V4}$$

Il est possible d'adapter la forme de la courbe d'écartométrie (figure 4) en jouant sur la distance D présentée entre le diaphragme 3 et le détecteur 2 (figure 3), ainsi que sur la forme et la dimension du trou du diaphragme.

La forme du trou peut être différente de celle circulaire représentée. Par exemple un trou carré donne une écartométrie proportionnelle à tg$\theta$,$\theta$ étant l'angle de dépointage, et donc non linéaire avec ce paramètre. Un trou rond par contre permet de linéariser la courbe de réponse en fonction du dépointage.

La figure 4 représente cette courbe de réponse pour le dépointage selon l'axe Y en relation avec la figure 3 qui correspond à une coupe selon les axes Y et Z.

La distance D peut être choisie réduite ce qui accroît considérablement le champ de détection sans changer la sensibilité du dispositif.

Le système est optimisé dans le cas de l'ouverture circulaire envisagée; le diamètre ∅d est choisi égal au rayon R du détecteur 2. Dans ce cas, l'écartomètre sature lorsque XC = ∅d/2 soit tg $\theta_X$ = ∅d/2D. Il en est de même pour EY et $\theta_Y$ (figure 4).

Dans une réalisation plus complexe on peut considérer les paramètres D et ∅d réglables en utilisant un diaphragme variable et déplaçable selon des techniques connues.

Les circuits électroniques de traitement et de calcul 6 peuvent être réalisés sous faible dimension en circuit solide et incorporés dans le boîtier à l'arrière de la face 5. On peut également, pour le calcul, utiliser un calculateur annexe disponible. La sélection du rayonnement utile, c'est-à-dire celui provenant de la source S à localiser, est obtenue de manière connue avec un détecteur sensible dans les spectres de radiation correspondant aux sources à détecter. Le domaine spectral d'exploitation peut, dans le cas de détection d'illuminateurs laser se situer dans l'infrarouge proche ou lointain. Il n'est pas exclu d'utiliser en complément le filtrage optique réalisé avantageusement par dépôt sur la paroi interne du hublot 4.

Dans le cas d'utilisation pour la détection d'alerte laser émettant à 1,06$\mu$m on trouve des détecteurs standards de diamètre 16mm. En plaçant un diaphragme 3 circulaire d'ouverture 8mm à une distance de 4mm devant le détecteur on obtient un signal d'écartométrie linéaire en fonction du dépointage dans un champ de ± 45°. La surface des pupilles est dans cet exemple de 0,5cm$^2$.

**Revendications**

1. Dispositif optoélectrique de détection et de localisation de source rayonnante, comportant un détecteur plan (2) à quatre quadrants précédé d'un élément optique récepteur (3), et des circuits de traitement et d'écartométrie (6) des quatre signaux détectés qui déterminent les coordonnées d'écarts de la tache formée par la source sur le détecteur par rapport au centre du détecteur, ledit élément optique étant un diaphragme plan parallèle au détecteur (2) formé par une zone centrale transparente d'un cache opaque (3), de manière à autoriser sans focalisation la détection et la localisation de source dans un champ d'observation important, dispositif caractérisé en ce que les circuits de traitement et d'écartométrie (6) des quatre signaux détectés localisent la direction de la source par rapport à une direction de référence (Z) du dispositif passant par le centre (O) du détecteur ( 2) et le centre (O') du cache (3) en déterminant l'angle de dépointage de la source par rapport à la direction de référence à partir d'une courbe de mesure de déviation dépendant de la distance D entre le plan du diaphragme et le plan du détecteur (2) et de la forme et des dimensions de l'ouverture dudit diaphragme et reliant ledit angle de dépointage auxdites coordonnées d'écarts.

2. Dispositif selon la revendication 1, caractérisé en ce que la zone centrale est circulaire.

3. Dispositif selon la revendication 1 ou 2, caractérisé en ce que le diaphragme est précédé par un hublot (4) transparent de protection formant la face avant d'un boîtier (1) à l'intérieur duquel sont disposés le diaphragme (3) et le détecteur (2).

4. Dispositif selon l'une quelconque des revendications précédentes caractérisé en ce que qu'il comporte un filtre optique (7).

5. Dispositif selon l'ensemble des revendications 3 et 4, caractérisé en ce que le filtre optique (7) est réalisé par dépôt sur la face du hublot (4) interne au boîtier.

6. Dispositif selon la revendication 2, ou l'un quelconque des ensembles de revendications 2-3, 2-4, 2-5, caractérisé en ce que le diamètre (⌀d) du diaphragme (3) est déterminé égal au rayon (R) du détecteur quatre quadrants lequel est de forme circulaire.

7. Dispositif selon la revendication 2 ou 6, ou l'un quelconque des ensembles de revendications 2-3, 2-4, 2-5, caractérisé en ce que le diaphragme (3) est réglable pour modifier le diamètre de l'ouverture centrale de manière à modifier consécutivement l'ouverture angulaire du champ d'observation.

8. Dispositif selon la revendication 7, caractérisé en ce que le diaphragme (3) est, en outre, déplaçable pour modifier sa distance d'éloignement par rapport au détecteur plan (2).

9. Dispositif de détection et de localisation spatiale de source rayonnante formé en utilisant au moins deux dispositifs de détection et de localisation directionnelle selon l'une quelconque des revendications précédentes.

10. Dispositif selon l'une quelconque des revendications 1 à 8, utilisé pour la détection et la localisation de sources lasers.

**Claims**

1. Optoelectronic device for the detection and localization of a radiating source, including a four-quadrant plane detector (2) preceded by a receiver optic element (3), and by circuits (6) for processing and angular deviation measurement of the four signals detected which determine the deviation coordinates of the spot formed by the source on the detector with respect to the centre of the detector, the said optic element being a plane diaphragm parallel to the detector (2) formed by a transparent central region of an opaque mask (3), so as to allow, without focusing, detection and localization of a source within a substantial field of observation, which device is characterised in that the circuits (6) for processing and angular deviation measurement of the four signals detected localise the direction of the source with respect to a reference direction (Z) of the device passing through the centre (O) of the detector (2) and the centre (O') of the mask (3) by determining the aim-off angle of the source with respect to the reference direction from a deviation measurement curve which depends on the distance D between the plane of the diaphragm and the plane of the detector (2) and on the shape and dimensions of the aperture of the said diaphragm and which links the said aim-off angle with the said deviation coordinates.

2. Device according to Claim 1, characterised in that the central region is circular.

3. Device according to Claims 1 or 2, characterised in that the diaphragm is preceded by a transparent porthole (4) for protection forming the front face of a box (1) inside which are arranged the diaphragm (3) and the detector (2).

4. Device according to any one of the preceding claims, characterised in that it includes an optical filter (7).

5. Device according to Claims 3 and 4 together, characterised in that the optical filter (7) is produced by deposition on the face of the porthole (4) internal to the box.

6. Device according to Claim 2, or any one of the sets of Claims 2-3, 2-4, 2-5, characterised in that the diameter (∅d) of the diaphragm (3) is determined to be equal to the radius (R) of the four-quadrant detector which is circular in shape.

7. Device according to Claim 2, or 6, or any one of the sets of Claims 2-3, 2-4, 2-5, characterised in that the diaphragm (3) is adjustable in order to modify the diameter of the central aperture, so as to modify consecutively the angular aperture of the field of observation.

8. Device according to Claim 7, characterised in that the diaphragm (3) is, moreover, displaceable in order to modify its distance of separation with respect to the plane detector (2).

9. Device for the detection and spatial localization of a radiating source, formed by using at least two devices for detection and directional localization according to any one of the preceding claims.

10. Device according to any one of Claims 1 to 8, used for the detection and localization of laser sources.

**Patentansprüche**

1. Optoelektronisches Gerät zur Erfassung und zur Standortbestimmung einer strahlenden Quelle, mit einem ebenen Detektor (2) mit vier Quadranten, dem ein optisches Empfangselement (3) vorausgeht, und Schaltungen zur Verarbeitung und zur Abstandsmessung (6) der vier erfaßten Signalen, die die Koordinaten der Abweichungen des von der Quelle auf dem Detektor gebildeten Flecks in bezug auf das Zentrum des Detektors bestimmen, wobei das optische Element eine zum Detektor (2) parallele ebene Blende ist, die von einer lichtdurchlässigen mittigen Zone einer lichtundurchlässigen Maske (3) gebildet ist, derart, daß die Erfassung und die Standortbestimmung der Quelle in einem großen Beobachtungsfeld zulässig ist, wobei das Gerät dadurch gekennzeichnet ist, daß die Schaltungen zur Verarbeitung und Abstandsmessung (6) der vier erfaßten Signalen die Richtung der Quelle in bezug auf eine durch den Mittelpunkt (O) des Detektors (2) und den Mittelpunkt (O') der Maske (3) verlaufende Bezugsrichtung (Z) des Gerätes lokalisieren, indem sie den Fehlausrichtungswinkel der Quelle in bezug auf die Bezugsrichtung anhand einer Abweichungsmeßkurve bestimmen, die vom Abstand D zwischen der Ebene der Blende und der Ebene des Detektors (2) und von der Form und den Abmessungen der Öffnung der Blende abhängt und den Fehlausrichtungswinkel mit den Abweichungskoordinaten in Beziehung setzt.

2. Gerät gemäß Anspruch 1, dadurch gekennzeichnet, daß die mittige Zone kreisförmig ist.

3. Gerät gemäß Anspruch 1 oder 2, dadurch gekennzeichnet, daß der Blende ein lichtdurchlässiges Abschirmfenster (4) vorgesetzt ist, das die Vorderseite eines Gehäuses (1) bildet, in dem die Blende (3) und der Detektor (2) angeordnet sind.

4. Gerät gemäß einem der vorangegangenen Ansprüche, dadurch gekennzeichnet, daß sie ein optisches Filter (7) enthält.

5. Gerät gemäß der Gruppe der Ansprüche 3 und 4, dadurch gekennzeichnet, daß das optische Filter (7) durch eine Beschichtung der im Gehäuse befindlichen Fläche des Fensters (4) verwirklicht ist.

6. Gerät gemäß Anspruch 2 oder einer der Gruppen von Ansprüchen 2 - 3, 2 - 4, 2 - 5, dadurch gekennzeichnet, daß der Durchmesser (∅d) der Blende (3) so festgelegt ist, daß er gleich dem Radius (R) des Vierquadranten-Detektors ist, der Kreisform besitzt.

7. Gerät gemäß Anspruch 2 oder 6 oder einer der Gruppen von Ansprüchen 2 - 3, 2 - 4, 2 - 5, dadurch gekennzeichnet, daß die Blende (3) einstellbar ist, um den Durchmesser der mittigen Öffnung zu verändern, derart, daß infolgedessen die Winkelöffnung des Beobachtungsfeldes verändert wird.

8. Gerät gemäß Anspruch 7, dadurch gekennzeichnet, daß die Blende (3) außerdem verschiebbar ist, um den Entfernungsabstand in bezug auf die Detektorebene (2) zu verändern.

9. Gerät zur Erfassung und zur räumlichen Standortbestimmung einer strahlenden Quelle, das unter Verwendung von wenigstens zwei Geräten zur Erfassung und zur gerichteten Standortbestimmung gemäß einem der vorangehenden Ansprüche gebildet ist.

10. Gerät gemäß einem der Ansprüche 1 bis 8, das zur Erfassung und zur Standortbestimmung von Laserquellen verwendet wird.

# FIG.1

CIRCUIT D'ECARTOMETRIE

# FIG.2

SOMMATEUR

VALID. DET.

COMP.

TRAITEMENT ET CALCUL

# FIG.3

# FIG.4

$\text{Arc tg.} \dfrac{\emptyset d}{2D}$